Europäisches Patentamt

(19) European Patent Office

Office européen des brevets

(11) Publication number: **0 016 619**
**B1**

(12) **EUROPEAN PATENT SPECIFICATION**

(45) Date of publication of patent specification: **13.07.83**

(51) Int. Cl.³: **B 65 G 1/04, B 65 G 37/02**

(21) Application number: **80300788.9**

(22) Date of filing: **14.03.80**

(54) **Materials handling system and method.**

(30) Priority: **15.03.79 US 20783**

(43) Date of publication of application:
**01.10.80 Bulletin 80/20**

(45) Publication of the grant of the patent:
**13.07.83 Bulletin 83/28**

(84) Designated Contracting States:
**DE FR GB IT**

(56) References cited:
**DE - B - 2 203 565**
**US - A - 3 182 823**
**US - A - 3 595 412**
**US - A - 4 074 120**

(73) Proprietor: **EATON-KENWAY,INC.**
**310 South Main Suite 1400**
**Salt Lake City Utah 84101 (US)**

(72) Inventor: **Allred, James K.**
**4460 Lone Pine Drive**
**Salt Lake City Utah 84417 (US)**
Inventor: **Desprez, Barry I.**
**8051 Oak Creek Drive**
**Sandy Utah 84070 (US)**
Inventor: **Quinn, Edward B.**
**1385 South 1425 East**
**Bountiful Utah 84010 (US)**
Inventor: **Strayhorn, Clarence E.**
**2590 East Portsmouth Avenue**
**Salt Lake City Utah 84121 (US)**

(74) Representative: **Slight, Geoffrey Charles et al,**
**Graham Watt & Co. Riverhead**
**Sevenoaks Kent TN13 2BN (GB)**

Courier Press, Leamington Spa, England

Materials handling system and method

The present invention relates to a materials handling system and method for the storage and retrieval of goods.

US—A—3 182 823 describes a transfer apparatus and method for delivering loads to and from a mechanized storage system comprising a storage array having n aisles. The apparatus includes a continuously operated conveyor for input and output loads, stop means for retaining input or output loads at each of n deposit and pick-up stations, one associated with each aisle and means for transferring loads between the pick-up and deposit stations and the conveyor.

DE—B 2 203 565 describes a system for materials handling of a plurality of loads comprising a storage array comprising n aisles separating high rise storage bays, n storage/retrieval machines one displaceable along each aisle, conveyor means for displacing loads unidirectionally in front of the aisles of the storage array, means for loading input loads at the input end of the conveyor means, whereby the loads on the conveyor means are metered generally corresponding to the space between the aisles of the array so as to convey the load n to aisle n, load n − 1 to aisle n − 1, and so on, means for transferring input loads from and for transferring output loads on to the conveyor means at each of the n aisles substantially simultaneously and means for discharging the output loads at the output end of the conveyor means.

In this system the conveyor means is moved stepwise to enable the conveyor means to be loaded and unloaded respectively with input and output loads, one at a time.

Automated materials handling systems are also well known in the art and typically provide for storage and retrieval of palletized goods. Computer controlled automated storage systems such as that disclosed in U.S. Patent 4 074 120 have recognised the value and importance of tracking goods stored so that the goods can be retrieved in accordance with a customer's order. The tracking is accomplished by identifying the goods at or near the input station and then delivering the goods to the pick-up station for pick up and storage by the storage/retrievel (S/R) machines. Delays due to conveyor stoppage, clearly adversely affect the total through-put capacity of the system.

To overcome the problem of delays without unduly increasing the expense and complication of the system the present invention provides a system for materials handling of a plurality of loads as described in the third paragraph of this description characterised in that the conveyor means is continuously operated in that the ends of the conveyor means have respective input and output sections extending the conveyor means beyond the storage array and in that there is provided means for queueing n input loads in a stopped waiting position on the input section of the conveyor means, means for metering the n loads at spaced intervals from the input section of the conveyor means onto the intermediate transfer section of the conveyor means in front of the storage array, means for halting the n input loads on the conveyor means at the aisles, means for releasing output loads at the aisles for movement by the conveyor means and means for queueing n output loads in a stopped waiting position on the output section of the conveyor means for unloading from the conveyor means.

The system of the present invention improved load through-put and increases the efficiency of an automated materials handling system having a plurality of S/R machines servicing a single continuous conveyor.

The system accommodates maximum efficiency even when outputs exceed inputs or inputs exceed outputs by managing empty load pallets, as will be explained.

The present invention also provides a method for materials handling of a plurality of loads in a materials handling system having a storage array comprising n aisles separating high rise storage bins, n storage/retrieval machines one displaceable along each aisle, a pick up and a deposit station associated with each aisle and conveyor means for displacing loads unidirectionally in front of the aisle of the storage array from an input end in the direction of an output end of the conveyor means whereby n input loads are metered at spaced intervals along the conveyor means, the spacing generally corresponding to the space between aisles such that the first load traverses the distance of the storage array to the nth aisle and the second load traverses the distance of the storage array to the n − 1 aisle, the third load to the n − 2 aisle and so on, the last load being metered corresponding to the first aisle of the storage array, the n input loads are halted at the aisles and transferred from the conveyor means and output loads coming from the storage array are transferred substantially simultaneously onto the conveyor means for movement by the conveyor means and then the output loads at the output end of the conveyor means are discharged characterised by continuously operating the conveyor means queueing n input loads in a stopped waiting position on the input end of said conveyor means and queueing the output loads in a stopped and waiting position on the output end of the conveyor means for unloading from the conveyor means.

One way of performing the invention in both its system and method aspects will now be described by way of example and not by way of limitation with reference to drawings which illustrate one specific system and method according to the present invention.

In the drawings:—

Figure 1 is a schematic perspective of a system of the invention for materials handling of a plurality of loads and

Figure 2 diagrammatically represents the steps in the flow of goods into and out of the system of Figure 1.

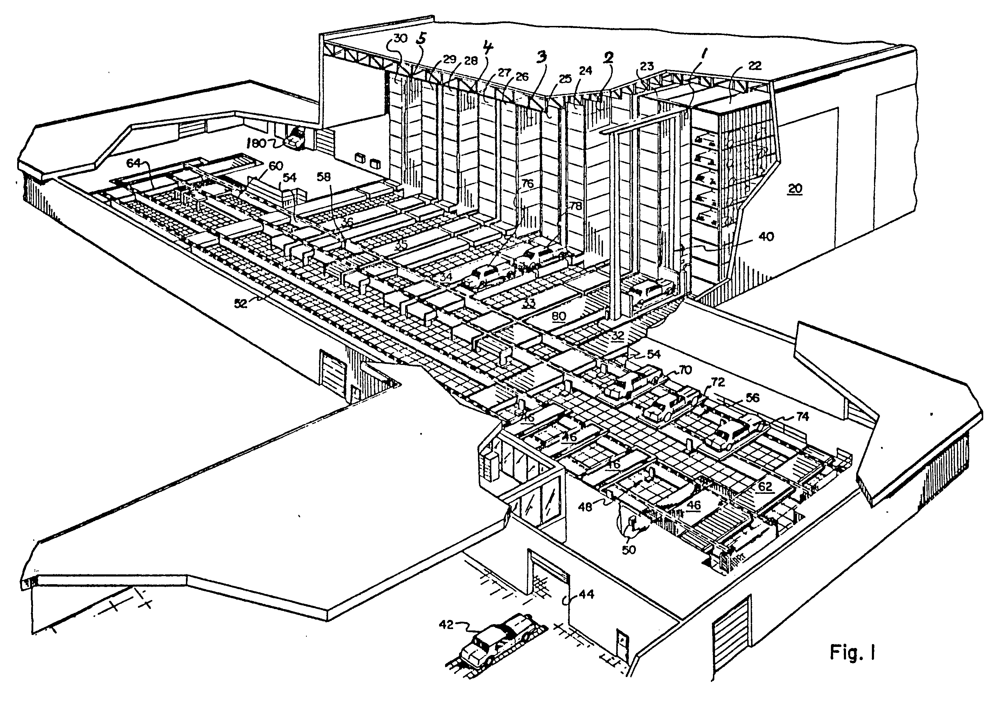

As illustrated in Figure 1, a high rise storage warehouse 20 comprises an array of storage bays 22 to 30. The storage bays 22 to 30 are separated by five parallel aisles 1 to 5. Clearly, while only five storage aisles are illustrated in Figure 1, any suitable number of storage aisles and storage bin assemblies could be used. The storage bin assemblies 22 to 30 are typically constructed of metal rack which open into the corresponding aisles 1 to 5.

Each aisle is provided with a computer controlled storage/retrieval (S/R) machine 40, only one of which is illustrated in Figure 1, associated with aisle 1. The S/R machine 40 is typical of all other S/R machines in the corresponding aisles 2 to 5. There are a number of S/R machine configurations which could be used in a system of the present invention and any convenient S/R machine configuration may be used.

While the system illustrated in Figure 1 could be used to handle a wide variety of unit load goods for convienience, the system will be described in connection with automobile storage and retrieval. Automobiles e.g. 42, fresh from the assembly line, enter the system one at a time at 44 and each is driven onto a separate pallet 46. Each pallet 46 is constructed of metal and has dimensions of approximately 12 feet (3.6 meters) by 22 feet (6.6 meters). The pallets 46 have been previously placed in a pallet queue generally designated 48. The pallet queue 48 is part of an elongated, continuous conveyor 52 which runs substantially perpendicular to aisles 1 to 5. Conveyor 52 is preferably a chain-driven conveyor. When the pallets 46 reach the pallet queue area 48, air-driven pop-up sections of known form *per se* (not shown) raise the pallets 46 off the moving chains and hold the pallets in the queued position for on-loading.

The high rise storage system is also provided with a second continuous conveyor 54, conveyor 54 running substantially parallel to conveyor 52 and being similarly substantially perpendicular to aisles 1 to 5. Conveyor 54 is preferably a chain-driven conveyor. Conveyor 54 is divided into three sections identified from right to left of Figure 1 as the input section 56 extending the conveyor beyond the storage warehouse (20) at one end, transfer section 58 extending in front of the storage warehouse (20) and output section 60 extending the conveyor beyond the storage warehouse (20) at the other end. Conveyor 52 and conveyor 54 are connected at the input end by conveyor 62 and at the output end by conveyor 64. Conveyors 62 and 64 are preferably chain-driven live roller conveyors.

It is pointed out that all of the intended queue areas including the empty pallet queue 48, the input section 56 and the output section 60 are provided with conventional air-driven pop-up sections that raise the pallets off the moving chains until de-energised, whereupon the pallets are placed back on the moving chains for displacement by the conveyor.

The automobile 42 is placed on the pallet 46 and a description thereof entered at the computer terminal 50.

Each automobile delivered to the high-rise storage system is provided with a pre-printed tag exhibiting the Vehicle Identification Numbers (VIN). The VIN, destination and other pertinent data will be entered into a Central Processing Unit (CPU) at the time of assembly. When the automobile 42 is placed on pallet 46, the vehicle will be identified using a conventional laser scanner which will read the VIN from the pre-printed tag. After the automobile has been driven onto pallet 46, the driver presses a button at terminal 50 which releases the automobile to the input conveyor system under direction of the control system in the CPU (not shown).

Thereafter, the pallet 46 is lowered onto the continuously moving conveyor 52 and displaced first to parallel conveyor 62 and thereafter is displaced onto conveyor 54 at the input section 56 to form an input queue. As illustrated in Figure 1, loaded pallets 70 and 72 are illustrated in a stopped and waiting position in the input queue and loaded pallet 74 is moving into the queue.

Loaded pallet 70 will not be released onto the conveyor 54 for displacement into the transfer section 58 until the number of pallets in the input queue 56 at the input section equals the number of aisles in the high rise storage system (i.e. five in the present embodiment). Accordingly, when the output requirements for the system exceed the input requirements for empty pallets 46 may be transferred to the input queue in lieu of loaded pallets.

When the input queue is filled with five pallets (either loaded or unloaded), the pallets are metered onto the conveyor 54 at intervals which essentially correspond to the distance between the aisles. Note that the distance between the pallets is not controlled by the speed of any transfer mechanism or by the speed of the S/R machines 40 and is not dependent upon the speed of the conveyor 54.

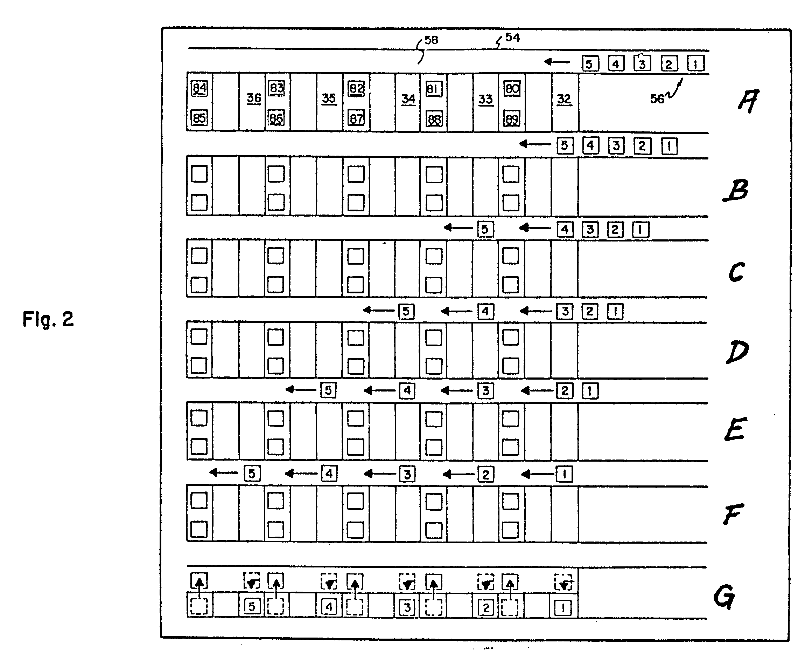

The metering sequence is best understood by reference to Figure 2 which schematically illustrates the movement of pallets from the input queue to the transfer section 58 of the conveyor 54.

With continued reference to Figure 2, five pallets are illustrated schematically in the input queue. The loads are numbered 1 to 5 for convenience. The transfer section 58 of the conveyor is illustrated immediately adjacent the S/R pickup stations 32 to 36 and the S/R deposit stations 80 to 84. Secondary deposit stations 85 to 89 are also schematically illustrated.

The loads are metered in accordance with the steps illustrated in Figure 2. As illustrated in step A, the five loads are queued in the input queue and all SR deposit stations 80 to 89 are filled. In step B, load 5 is released and permitted to progress along the conveyor section 58. As soon as load 5 has travelled the distance between aisle 1 and aisle 2, load 4 is released as illustrated in step C. Similarly, when load 4 has travelled the distance between aisles 1 and 2, load 3 is released as illustrated in step D and so on until each of the loads is carried simultaneously on the conveyor section 58 as illustrated in step F. When loads 1 to 5 are aligned with the corresponding input stations 32 to 36, all of the five loads are simultaneously taken from the conveyor section 58 and transferred to the corresponding input stations 32 to 36. Substantially simultaneously, output loads from deposit stations 80 to 84 are transferred onto the conveyor section 58 as illustrated in step G. Air-driven pop-up squaring stop sections hold the pallets at the transfer location awaiting transfer engagement from the moving conveyor to the pickup station as described so that the conveyor 54 may be kept continuously operating. If desired, a load straightener may be utilised in connection with the pop-up sections to assure proper alignment of the load for transfer.

With respect to the system and the method described in connection with Figure 2, it is particularly pointed out that the loads 1 to 5 are given pre-assigned aisle locations, far to near. Accordingly, random access of passing pallets is avoided, along with the corresponding necessity of spacing the pallets a sufficient distance to prevent close encounters during transfer time. Moreover, the simultaneous exchange of input and output pallets as illustrated in step G of Figure 2 facilitates a continuous operation with minimum spacing between pallets 1 to 5. Accordingly, maximum through-put is achieved even though transfer times onto and off of the conveyor 54 are long compared to the rate of travel of loads along the conveyor section 58.

Dual deposit stations 80 to 89 are illustrated in Figures 1 and 2. While single deposit stations could be used, the dual deposit station has proven more effective in that an output load is always in the "ready" position for exchange with an input load on conveyor section 58 even if the S/R machine has been delayed in retrieving the output load from storage.

The described system and method is equally effective whether input requirements exceed output requirements or *vice versa*. Note, for example, if input requirements exceed output requirements, the loads 1 to 5 illustrated in Figure 2 will contain automobiles such as those illustrated at 70, 72 and 74 illustrated in Figure 1. On the other hand, the output loads at deposit stations 80 to 84 may include one or more empty pallets. Because a pallet is exchanged at each step G as illustrated in Figure 2, whether loaded or empty, continuous movement of material is assured.

On the other hand, if output requirements should exceed input requirements, the loads 1 to 5 (Figure 2) in the queue at the input section 56 may include one or more empty pallets, such as pallet 46 illustrated in Figure 1. At the same time, the output loads at deposit stations 80 to 89 will all include automobiles such as 76 and 78 illustrated in Figure 1.

The output loads are conveyed by the transfer section 58 of the conveyor to the output queue at section 60 of the conveyor (see Figure 1) wherein the loads assume a stopped and waiting position ready for removal. In the illustrated embodiment, automobiles are driven off the corresponding pallet and discharged from the system at 180 for shipment by rail or truck. The empty pallet is then taken via conveyor 64 to conveyor 52 and returned to the empty pallet queue 48.

From the foregoing, it can be appreciated that the described system and method accommodates maximum through-put of goods without requiring alteration of the spacing of the loads depending upon the speed of the transfer mechanism from the continuous moving conveyor to the S/R machine input station that might otherwise occur as a result of the large pallet sizes. Moreover, the maximised through-put can be obtained independent of whether input requirements exceed output requirements or whether output requirements exceed input requirements. Furthermore, for any number n of storage aisles, a corresponding number n of loads may be queued at the input staging area and assigned a particular storage aisle on a far to near correspondence. Synchronised off-load and on-load of the goods onto the single conveyor permits efficient use of the system without the expense and complication of multiple conveyor inputs.

## Claims

1. A system for materials handling of a plurality of loads comprising a storage array (20) comprising n aisles (1 to 5) separating high rise storage bays (22, 23, etc.), n storage/retrieval machines (40) one displaceable along each aisle, a pick up (80 etc.) and at least one deposit (32 etc.) station associated with each aisle, conveyor means (54) for displacing loads (70, 72, 74, etc.) unidirectionally in front of the aisles of the storage array, means (62) for loading input loads at the input end of the conveyor means whereby the loads on the conveyor means are metered generally corresponding to the space between the aisles of the array so as to convey the load n to aisle n, load n − 1 to aisle n − 1, and so on, means for transferring input loads from and for transferring output loads onto the conveyor means at each of the n aisles substantially simultaneously and means (64) for discharging the output loads at the output end of the conveyor means characterised in that the conveyor means is continuously operated in that the ends of the conveyor means have respective input and output sections (56 and 60) extending the conveyor means beyond the storage array (20) and in that there is provided means for queueing n input loads (70, 72, 74 etc.) in a stopped waiting position on the input section (56) of the conveyor means, means for metering the n loads at spaced intervals from the input section (56) of the conveyor means onto the intermediate transfer section (58) of the conveyor means in front of the storage array (20), means for halting the n input loads on the conveyor means at the aisles, means for releasing output loads at the aisles for movement by the conveyor means and means for queueing n output loads in a stopped waiting position on the output section (60) of the conveyor means for unloading from the conveyor means.

2. A method for materials handling of a plurality of loads in a materials handling system having a storage array comprising n aisles separating high rise storage bins, n storage/retrieval machines one displaceable along each aisle, a pick up (80) and a deposit (32) station associated with each aisle and conveyor means (54) for displacing loads (70, 72, 74, etc.) unidirectionally in front of the aisle of the storage array (2) from an input end in the direction of an output end of the conveyor means whereby n input loads are metered at spaced intervals along the conveyor means (54), the spacing generally corresponding to the space between aisles (1, 2, 3, 4 and 5) such that the first load traverses the distance of the storage array to the nth aisle and the second load traverses the distance of the storage array to the n − 1 aisle, the third load to the n − 2 aisle and so on, the last load being metered corresponding to the first aisle of the storage array, the n input loads are halted at the aisles and transferred from the conveyor means and output loads coming from the storage array (20) are transferred substantially simultaneously onto the conveyor means for movement by the conveyor means (54) and then the output loads (76) at the output end of the conveyor means are discharged characterised by continuously operating the conveyor means (54) queueing n input loads (70, 72, 74, etc.) in a stopped waiting position on the input end of said conveyor means (as at 56) and queueing the output loads (76) in a stopped and waiting position on the output end of the conveyor means (as at 60) for unloading from the conveyor means.

**Revendications**

1. Un système pour la manutention de matériaux constitués par une série de charges, comprenant un agencement de stockage (20) comprenant n couloirs (1 à 5) séparant des travées de stockage (22, 23, etc.) de grande hauteur, n machines de stockage/récupération (40) dont une peut se déplacer le long de chaque couloir une station de reprise (80, etc.) et au moins une station de dépôt (32, etc.) associées à chaque couloir, des moyens transporteurs (54) pour transporter des charges (70, 72, 74, etc.) dans un seul sens devant les couloirs de l'agencement de stockage, des moyens (62) pour charger des charges d'entrée sur l'extrémité d'entrée des moyens transporteurs de telle sorte que les charges portées par les moyens transporteurs sont réparties d'une manière qui correspond, dans l'ensemble à l'espace entre les couloirs de l'ensemble, de façon à transporter la charge n jusqu'au couloir n, la charge n − 1 jusqu'au couloir n − 1, et ainsi de suite, des moyens pour tranférer les charges d'entrée hors des moyens transporteurs et pour transférer les charges de sortie aux moyens transporteurs à chacun des n couloirs sensiblement simultanément et des moyens (64) pour décharger les charges de sortie à l'extrémité de sortie des moyens transporteurs, caractérisé en ce que les moyens transporteurs sont actionnés continuellement, en ce que les extrémités des moyens transporteurs comportent des parties d'entrée et de sortie respectives (56 et 60) qui prolongent les moyens transporteurs au-delà de l'agencement de stockage (20), et en ce qu'il est prévu des moyens pour mettre en file d'attente n charges d'entrée (70, 72, 74, etc.) dans une position d'attente arrêtée sur la partie d'entrée (56) des moyens transporteurs, des moyens pour répartir les n charges à des intervalles espacés à partir de la partie d'entrée (56) des moyens transporteurs sur la partie de transfert intermédiaire (58) des moyens transporteurs devant l'agencement de stockage (20), des moyens pour arrêter les n charges d'entrée sur les moyens transporteurs au niveau des couloirs, des moyens pour libérer des charges de sortie au niveau des couloirs en vue de leur déplacement par les moyens transporteurs et des moyens pour mettre en file d'attente n charges de sortie dans une position d'attente arrêtée sur la partie de sortie (60) des moyens transporteurs pour le déchargement hors des moyens transporteurs.

2. Une procédé pour la manutention de matériaux constitués par une série de charges dans un système de manutention de matériaux comportant un agencement de stockage comprenant n couloirs séparant des casiers de stockage de grande hauteur, n machines de stockage/récupération dont une peut se déplacer le long de chaque couloir, une station de reprise (80) et une station de dépôt (32) associées à chaque couloir et des moyens transporteurs (54) pour déplacer des charges (70, 72, 74, etc.) dans un seul sens devant les couloirs de l'agencement de stockage (2) depuis une extrémité d'entrée dans la direction d'une extrémité de sortie des moyens transporteurs de telle sorte que n charges d'entrée sont réparties à des intervalles espacés le long des moyens transporteurs (54), l'espacement correspondant d'une manière générale à l'espace entre les couloirs (1, 2, 3, 4 et 5) de telle sorte que la première charge parcourt la distance de l'agencement de stockage jusqu'au $n^{\text{ème}}$ couloir et la seconde charge parcourt la distance de l'agencement de stockage jusqu'au couloir $n - 1$, la troisième charge jusqu'au couloir $n - 2$ et ainsi de suite, la dernière charge étant disposée de façon à correspondre au premier couloir de l'agencement de stockage, les n charges d'entrée sont arrêtées au niveau des couloirs et transférées hors des moyens transporteurs et des charges de sortie provenant de l'agencement de stockage (20) sont transférées sensiblement simultanément aux moyens transporteurs pour être déplacées par les moyens transporteurs (54), puis les charges de sortie (76), à l'extrémité de sortie des moyens transporteurs, sont déchargées, caractérisé en ce qu'il consiste à faire fonctionner continuellement les moyens transporteurs (54) à mettre en file d'attente n charges d'entrée (70, 72, 74, etc.) dans une position d'attente arrêtée sur l'extrémité d'entrée desdits moyens transporteurs (comme en 56) et à mettre en file d'attente les charges de sortie (76) dans une position arrêtée et en attente sur l'extrémité de sortie des moyens transporteurs (comme en 60) pour le déchargement hors des moyens transporteurs.

## Patentansprüche

1. Ein System zur Materialhandhabung einer Vielzahl von Lasten, wobei dieses System folgendes aufweist: Eine Speicheranordnung (20) mit n-Gängen (1—5), welche hochstehende Speicheranlagen (22, 23 usw.) trennen, n-Speicher/Entnahme-Maschinen (40), wobei ein längs jedes Gangs verschiebbar ist, einer Aufnahmestation (80 usw.) und mindestens einer Abgabestation (32 usw.) mit jedem Gang in Assoziation befindlich, und mit Transportmitteln (54) zur Versetzung der Lasten (70, 72, 74 usw.) in einer Richtung vor den Gängen der Speicheranordnung, Mittel (62) zum Laden von Eingangslasten am Eingangsende der Transportmittel, wodurch die Lasten auf den Transportmitteln zugemessen werden, und zwar im allgemeinen entsprechend dem Raum zwischen den Gängen der Anordnung, um so die Last n zum Gang n, die Last $n - 1$ zum Gang $n - 1$ usw. zu transportieren, Mittel zum Transferieren der Eingangslasten vom und zum Transferieren von Ausgangslasten auf die Transportmittel an jedem der n-Gänge im wesentlichen gleichzeitig und Mittel (64) zur Abgabe der Ausgangslasten am Ausgangsende der Transportmittel dadurch gekennzeichnet, daß die Transportmittel kontinuierlich betätigt werden, daß die Enden der Transportmittel jeweilige Eingangs- und Ausgangs-Abschnitte (56 und 60) aufweisen, die die Transportmittel über die Speicheranordnung (20) hinauserstrecken und daß Mittel vorgesehen sind, um die n-Eingangslasten (70, 72, 74 usw.) in einer gestoppten Warteposition auf den Eingangsabschnitt (56) der Transportmittel in einer Reihe anzuordnen, und wobei ferner Mittel vorgesehen sind, um die n-Lasten mit Abstandsintervallen vom Eingangsabschnitt (56) der Transportmittel auf den Zwischenübertragungsabschnitt (58) der Transportmittel vor der Speicheranordnung (20) zuzumessen, und wobei ferner Mittel vorgesehen sind, um die n-Eingangslasten auf den Transportmitteln an den Gängen anzuhalten, und wobei schließlich Mittel vorgesehen sind, um die Ausgangslasten an den Gängen für die Bewegung durch die Transportmittel freizugeben, und wobei schließlich Mittel vorhanden sind, um die n-Ausgangslasten in einer gestoppten Warteposition in einer Reihe anzuordnen, und zwar auf dem Ausgangsabschnitt (60) der Transportmittel zum Entladen von den Transportmitteln.

2. Verfahren zur Handhabung von Materialien einer Vielzahl von Lasten in einem Materialhandhabungssystem mit einer Speicheranordnung, die folgendes aufweist: n-hochragende Speicherbehälter trennende Gänge, n-Speicher/Entnahme-Maschinen, wobei eine längs jedes Gangs versetzbar ist, eine Aufnehmerstation (80) und eine Abgabestation (32), assoziert mit jedem Gang und Transportmittel (54) zur Versetzung der Lasten (70, 72, 74 usw.) in einer Richtung vor dem Gang der Speicheranordnung (2) von einem Eingangsende in Richtung eines Ausgangsendes der Transportmittel, wodurch n-Eingangslasten an mit Abstand angeordneten Intervallen längs der Transportmittel (54) zugemessen werden, wobei der Abstand im allgemeinen dem Raum zwischen Gängen (1, 2, 3, 4 und 5) derart entspricht, daß die erste Last den Abstand der Speicheranordnung zum n-ten Gang traversiert und die zweite Last den Abstand der Speicheranordnung zum $n - 1$ Gang traversiert, die dritte Last den $n - 2$ Gang usw., wobei die letzte Last entsprechend dem ersten Gang der Speicheranordnung zugemessen wird, und wobei die n-Eingangslasten an den Gängen angehalten werden und von den Transportmitteln transferiert werden und von der Speicheranordnung (20) kommende Ausgangslasten im wesentlichen gleichzeitig auf die Transportmittel transferiert werden, und zwar zur Bewegung durch die Transportmittel (54), wobei sodann die Ausgangslasten (76) am Ausgangsende der Transportmittel abgegeben werden, gekennzeichnet durch kontinuierlichen Betrieb der Transportmittel (54), wobei n-Eingangslasten (70, 72, 74 usw.) in einer Schlange in einer gestoppten Warteposition auf dem Eingangsende der Transportmittel (wie beispielsweise bei 56) angeordnet sind, und wobei die Ausgangslasten (76) in einer gestoppten und Warteposition am Ausgangsende der Transportmittel (wie beispielsweise bei 60) in einer Schlange angeordnet sind, und zwar zum Entladen von den Transportmitteln.

Fig. I

Fig. 2

0016619

A  B  C  D  E  F  G